# EUROPÄISCHE PATENTSCHRIFT

(11) **EP 3 633 866 B1**
(45) Veröffentlichungstag und Bekanntmachung des Hinweises auf die Patenterteilung: **04.06.2025**
(21) Anmeldenummer: 19200875.3
(22) Anmeldetag: 01.10.2019
(51) Int. Cl.: H04B 3/54

(54) **KOMPONENTE FÜR EIN FAHRZEUG**
COMPONENT FOR A VEHICLE
COMPOSANT POUR UN VÉHICULE

(30) Priorität: 02.10.2018 DE 102018124333
(43) Veröffentlichungstag der Anmeldung: 08.04.2020
(73) Patentinhaber: Huf Hülsbeck & Fürst GmbH & Co. KG, 42551 Velbert (DE)
(72) Erfinder: SIEG, Berthold, 46240 Bottrop (DE); Gornik, Andreas, 58285 Gevelsberg (DE)
(74) Vertreter: Bals & Vogel Patentanwälte PartGmbB

(56) Entgegenhaltungen:
- EP-A1- 3 094 008
- US-A1- 2006 187 015
- US-A1- 2014 015 408
- US-B1- 6 744 820
- SCHAERER THOMAS: "Die Transistor-LED-Konstantstromquelle mit ein oder zwei Transistoren und Konstantstromquelle mit Bandgap und Opamp", 3 July 2015 (2015-07-03), XP055908455, Retrieved from the Internet <URL:https://www.elektronik-kompendium.de/public/schaerer/currled.htm> [retrieved on 20220404]

## Beschreibung

Die vorliegende Erfindung betrifft ein System zur Informationsübertragung bei einer Komponente eines Fahrzeuges.

Es ist aus dem Stand der Technik bekannt, dass Komponenten eines Fahrzeuges über eine elektrische Versorgungsleitung durch eine Fahrzeugelektronik mit Energie versorgt werden, wobei diese elektrische Versorgungsleitung gleichzeitig zur Datenübertragung genutzt wird. Eine solche Datenübertragung erfolgt zum Beispiel mittels einer Power-Line-Kommunikation. Diese ermöglicht es, die Versorgungsleitung platzsparend und kosteneffizient gleichzeitig auch als Datenleitung zu nutzen. Entsprechender Stand der Technik ist bekannt aus US 6 744 820 B1, US 2006 / 187 015 A1, US 2014 / 015 408 A1, EP 3 094 008 A1 und der Veröffentlichung: Schaerer, Thomas "Die Transistor-LED-Konstantstromquelle mit ein oder zwei Transistoren und Konstantstromquelle mit Bandgap und Opamp" (3. Juli 2015, XP055908455).

Es hat sich allerdings der Nachteil gezeigt, dass die über die Versorgungsleitung übertragenen elektrischen Signale durch Schwankungen beeinträchtigt sein können. So nutzt die Fahrzeugelektronik zur Energieversorgung eine Batteriespannung des Fahrzeuges, welche diese Schwankungen verursachen kann. Die Schwankungen zum Beispiel einer Spannungshöhe der Signale können dabei die Datenübertragung beeinträchtigen. Maßnahmen zur Verbesserung der Stabilität (zum Beispiel der Spannungshöhe) können dabei technisch aufwendig und somit kostenaufwendig sein.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und zuverlässigere Informationsübertragung und/oder eine kostengünstige Lösung bereitzustellen.

Die voranstehende Aufgabe wird gelöst durch ein System mit den Merkmalen des unabhängigen Systemanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der nicht unter den Schutzbereich fallenden Komponente beschrieben sind, selbstverständlich auch im Zusammenhang mit dem erfindungsgemäßen System sowie dem nicht unter den Schutzbereich fallenden Verfahren und jeweils umgekehrt, so dass bezüglich der Offenbarung zu den einzelnen Aspekten stets wechselseitig Bezug genommen wird bzw. werden kann.

Erfindungsgemäß weist das System eine Komponente für ein Fahrzeug auf. Vorteilhaft ist es zudem, wenn das Fahrzeug als ein Kraftfahrzeug, insbesondere als ein Hybridfahrzeug oder als ein Elektrofahrzeug ausgebildet ist, vorzugsweise mit einem Hochvolt-Bordnetz und/oder einem Elektromotor. Außerdem kann es möglich sein, dass das Fahrzeug als ein Brennstoffzellenfahrzeug und/oder Personenkraftfahrzeug und/oder semi-autonomes oder autonomes Fahrzeug ausgebildet ist.

Vorteilhafterweise weist das Fahrzeug ein Sicherheitssystem auf, welches zum Beispiel durch eine Kommunikation (das heißt insbesondere eine uni- oder bidirektionale Informationsübertragung) mit einem Identifikationsgeber (ID-Geber) eine Authentifizierung ermöglicht. In Abhängigkeit von der Kommunikation und/oder der Authentifizierung kann wenigstens eine Funktion des Fahrzeuges aktiviert werden. Falls hierzu die Authentifizierung des ID-Gebers notwendig ist, kann es sich bei der Funktion um eine sicherheitsrelevante Funktion handeln, wie ein Entriegeln des Fahrzeuges oder eine Freigabe eines Motorstarts. Somit kann das Sicherheitssystem auch als ein passives Zugangssystem ausgebildet sein, welches ohne aktive manuelle Betätigung des ID-Gebers die Authentifizierung und/oder die Aktivierung der Funktion bei Detektion der Annäherung des ID-Gebers an das Fahrzeug initiiert. Hierzu wird beispielsweise wiederholt ein Wecksignal durch das Sicherheitssystem ausgesendet, welches durch den ID-Geber bei der Annäherung empfangen werden kann, und dann die Authentifizierung auslöst. Auch kann die Funktion eine Aktivierung einer Fahrzeugbeleuchtung und/oder ein Betätigen (Öffnen und/oder Schließen) einer Klappe (zum Beispiel Front- oder Heck- oder Seitenklappe bzw. -tür) betreffen. Beispielsweise wird automatisch bei der Detektion der Annäherung die Fahrzeugbeleuchtung aktiviert und/oder bei der Detektion einer Geste eines Benutzers die Klappe betätigt.

Vorteilhafterweise weist die Komponente die nachfolgenden elektrischen und/oder elektronischen Strukturen auf:
- eine elektrische (das heißt elektrisch leitende) Versorgungsleitung, um eine Energieversorgung für die Komponente über eine fahrzeugseitige Elektronik (zum Beispiel ein Steuergerät) bereitzustellen,
- eine Schaltungsanordnung zur Informationsübertragung insbesondere Datenübertragung mit der und/oder an die fahrzeugseitige(n) Elektronik (das heißt Fahrzeugelektronik) über die Versorgungsleitung durch eine Veränderung eines elektrischen Parameters der Energieversorgung,
- eine Modulationseinheit zur Bereitstellung der Veränderung durch ein Einprägen (insbesondere Einstellen und/oder Erzwingen) eines definierten Wertes für den Parameter.

Dies hat den Vorteil, dass die Komponente in technisch einfacher Weise selbst dafür sorgen kann, dass zur Informationsübertragung der Parameter stabil (und wiederholbar) auf den definierten Wert eingestellt wird. Sofern herkömmliche Lösungen auf eine Stabilisierung der Energieversorgung durch die Fahrzeugelektronik setzen, kann erfindungsgemäß die Stabilisierung (lediglich) für die Informationsübertragung beziehungsweise auf die Informationsübertragung reduziert werden und durch die Komponente ermöglicht werden.

Die Versorgungsleitung kann zum Beispiel zur Power-Line-Datenübertragung ausgeführt sein. Somit kann es möglich sein, dass durch die Fahrzeugelektronik eine Power-Line-Datenübertragung bereitgestellt wird. Hierzu kann beispielsweise auch durch die Fahrzeugelektronik ein Bussystem für diese Datenübertragung bereitgestellt werden, sodass die Versorgungsleitung als Bussystem-Übertragungsleitung ausgeführt sein kann.

Es kann möglich sein, dass die Informationsübertragung als Kommunikation zur Authentifizierung eines ID-Gebers durch das Fahrzeug ausgeführt ist. Beispielsweise werden von dem ID-Geber (zum Beispiel kontaktlos) Daten an die Komponente übertragen, und anschließend über die Versorgungsleitung und/oder auf die Energieversorgung moduliert von der Komponente an die fahrzeugseitige Elektronik weiter übertragen. Beispielsweise dient die fahrzeugseitige Elektronik zur Bereitstellung des Sicherheitssystems und/oder führt einen Vergleich der übertragenen Informationen mit einer Vorgabe (wie einem geheimen Code) durch. Bei einer durch den Vergleich festgestellten Übereinstimmung kann zum Beispiel eine sicherheitsrelevante Funktion des Fahrzeuges aktiviert werden. Die Informationsübertragung ist somit insbesondere eine elektronische Datenübertragung, um Daten von der Komponente an die fahrzeugseitige Elektronik zu übermitteln. Alternativ oder zusätzlich können die übertragenen Informationen auch zur Annäherungsdetektion oder Detektion einer Betätigung der Komponente dienen.

Vorteilhafterweise wird zur Informationsübertragung lediglich die Versorgungsleitung genutzt, und somit auf eine separate Datenleitung verzichtet. Darunter wird auch verstanden, dass ausschließlich maximal zwei elektrische Leitungen (die Versorgungsleitung und eine Masseleitung) zur Informationsübertragung genutzt werden, wobei gegebenenfalls nur diese von einer fahrzeugseitigen Elektronik zur Komponente führen. Auch kann die Komponente gegebenenfalls ausschließlich mit maximal zwei elektrischen Leitungen verbunden sein. Jede der elektrischen Leitungen kann zur Bereitstellung maximal eines einzigen Strompfads (oder Stromzweigs) ausgeführt sein, und daher zum Beispiel nicht mehrere Leiter zur Bereitstellung von unterschiedlichen Stromübertragungen aufweisen. Davon abzugrenzen ist zum Beispiel die mögliche Ausbildung der jeweiligen Leitung als Litze, bei welcher mehrere Einzeldrähte zur Bereitstellung einer einzigen Stromübertragung ausgeführt sind.

Die Versorgungsleitung ist beispielsweise primär zur Energieversorgung ausgebildet, gegebenenfalls in Zusammenwirkung mit einer Masseleitung (welcher zum Beispiel stets ein Massepotential aufweist). Dabei kann es aufgrund der genutzten Batteriespannung des Fahrzeuges zur Energieversorgung zu Schwankungen derselben kommen. Beispielsweise sind maximale Abweichungen eines Spannungswertes der Energieversorgung im Bereich von 0,01 V (Volt) bis 10 V, insbesondere 0,1 V bis 8 V, vorzugsweise 0,2 V bis 3 V, bevorzugt 0,4 V bis 1 V denkbar. Die gegebenenfalls nicht oder nur geringfügige Stabilisierung hat den Vorteil, dass der technische Aufwand zur Bereitstellung der Stabilisierung für die Energieversorgung verringert werden kann. Auch wenn dies für die Energieversorgung unproblematisch ist, gibt es gegebenenfalls Nachteile hinsichtlich der Informationsübertragung. Daher werden erfindungsgemäß weitere Maßnahmen getroffen, wie die Nutzung der Modulationseinheit.

Es kann von Vorteil sein, wenn im Rahmen der Erfindung die Modulationseinheit dazu ausgebildet ist, zum Einprägen eine Amplitude, vorzugsweise eine elektrische Stromstärke der Energieversorgung, auf den definierten Wert zu ziehen, insbesondere einzustellen, wobei vorzugsweise die Stromstärke der Parameter ist. Hierzu kann die Modulationseinheit beispielsweise als eine elektronische Schalteinheit ausgebildet sein, welche einen Stromzweig zu einer Stromsenke schließt. Vorzugsweise wird dabei durch die Stromsenke der definierte Wert bestimmt. Der definierte Wert kann zum Beispiel aktiv eingeprägt werden, vorteilhafterweise durch eine elektrische Quelle der Stromsenke. Auf diese Weise kann gewährleistet werden, dass die Veränderung zur Informationsübertragung stets in vordefinierter Weise erfolgt. Auch kann so eine Auswertung der Veränderung zum Beispiel durch die fahrzeugseitige Elektronik vereinfacht werden. Die Auswertung dient dabei zum Beispiel zum Ermitteln der übertragenen Informationen, um zum Beispiel eine Authentifizierung durchzuführen und/oder eine Funktion des Fahrzeuges (wie ein Entriegeln oder Öffnen einer Tür) zu aktivieren. Eine Stromsenke ist dabei zum Beispiel als eine Schaltung ausgebildet, welche in definierter Weise Strom aufnimmt.

Zudem ist im Rahmen der Erfindung denkbar, dass die Modulationseinheit eine elektronische Schalteinheit aufweist, welche in einem geschlossenen Schaltzustand die Versorgungsleitung mit einer Stromsenke, insbesondere Konstantstromsenke, verbindet, um vorzugsweise zum Einprägen eine elektrische Stromstärke der Energieversorgung als der Parameter konstant und/oder stabil auf den definierten Wert zu ziehen. Die (Konstant-) Stromsenke kann dabei als eine elektrische oder elektronische Anordnung ausgebildet sein, vorzugsweise mit wenigstens einem Widerstand. Die Anordnung kann zum Beispiel einen elektrischen Strom mit einer konstanten und/oder stabilen Stromstärke fließen lassen und/oder aufnehmen und/oder durch den Widerstand erzwingen, sodass insbesondere unabhängig von Schwankungen der Energieversorgung immer der gleiche Strom beziehungsweise ein Strom mit gleicher Stromstärke durch den Widerstand fließt und/oder durch die Stromsenke aufgenommen wird. Der Widerstand ist beispielsweise eine Impedanz oder ein ohmscher linearer Widerstand oder ein Drahtwiderstand oder dergleichen. Vorteilhafterweise kann dabei die Stromsenke unabhängig von einer Versorgungsspannung der Energieversorgung einen sehr stabilen Modulationsstrom bereitstellen. Der Modulationsstrom ist insbesondere ein zur Informationsübertragung verändertes Versorgungssignal, welches auf der Versorgungsleitung bereitgestellt ist.

Vorteilhafterweise kann die Modulationseinheit Teil einer schaltbaren Stromsenke, insbesondere Konstantstromsenke, sein, um zumindest einen Puls zur Informationsübertragung, vorzugsweise Datenübertragung, auf der Versorgungsleitung zu erzeugen. Dies hat den Vorteil, dass die Erfassung durch die fahrzeugseitige Elektronik, insbesondere durch ein Steuergerät des Fahrzeuges, einfacher möglich ist. Dies kann damit zusammenhängen, dass durch die Stromsenke durch Schwankungen der Energieversorgung verursachte Abweichungen der Pulsamplitude und/oder Pulsbreite zumindest verringert werden können.

Es kann weiter möglich sein, dass der eingeprägte Wert zumindest durch eine elektrische Quelle und/oder durch wenigstens einen Widerstand definiert ist, welche mit der Modulationseinheit elektrisch verbunden sind. Insbesondere kann dabei der Wert des Widerstands und/oder die bereitgestellte Spannungshöhe der Quelle den Wert definieren, welcher eingeprägt wird. Auch kann diese Definition gegebenenfalls von einer Spannungsschwelle abhängen, welche bei der Auswertung eines Versorgungssignals der Energieversorgung durch die fahrzeugseitige Elektronik genutzt wird. Dies ermöglicht es, die Informationsübertragung zuverlässiger zu ermöglichen.

Vorteilhaft ist es darüber hinaus, wenn im Rahmen der Erfindung eine schaltbare Stromsenke vorgesehen ist, wobei die Stromsenke zumindest durch die Modulationseinheit, und insbesondere durch eine damit verschaltete elektrische Quelle, vorzugsweise Stromquelle oder Spannungsquelle, ausgebildet ist, um insbesondere das Einprägen in Abhängigkeit von einem Schaltzustand der Modulationseinheit bereitzustellen. Die Modulationseinheit kann zum Beispiel als Transistor, insbesondere Feldeffekt-Transistor, bevorzugt Metall-Oxid-Halbleiter-Feldeffekt-Transistor ausgebildet sein. Somit kann die Modulationseinheit als elektronische Schalteinheit ausgebildet sein, welche durch ein elektrisches Signal angesteuert und umgeschaltet werden kann. Das elektrische Signal zum Umschalten, also das Eingangssignal oder Schaltsignal, kann zum Beispiel durch eine Elektronik der Komponente ausgegeben werden. Diese Elektronik weist hierzu zum Beispiel einen integrierten Schaltkreis, wie einen Microcontroller, auf. Insbesondere erfolgt dabei das Ansteuern durch das Steuersignal derart, dass das Umschalten der Modulationseinheit in Abhängigkeit von den zu übertragenden Informationen durchgeführt wird. In anderen Worten erfolgt das Einprägen des definierten Wertes ebenfalls in Abhängigkeit von den Informationen, sodass anhand dieser Veränderung die Informationen durch die fahrzeugseitige Elektronik erfasst werden können.

Es kann dabei möglich sein, dass der definierte Wert (welcher eingeprägt wird) höchstens eine Abweichung im Bereich von 0,001 V bis 2,0 V, vorzugsweise 0,1 V bis 1,0 V, bevorzugt 0,2 V bis 0,5 V aufweist. Auf diese Weise kann die Genauigkeit der Erfassung der Informationen durch die fahrzeugseitige Elektronik erhöht werden.

Erfindungsgemäß ist es vorgesehen, dass eine schaltbare Stromsenke zum Einprägen dadurch ausgebildet ist, dass die Modulationseinheit die Versorgungsleitung mit einem Widerstand (insbesondere Widerstandselement) verbindet, wobei vorzugsweise eine (elektrische) Quelle mit dem Widerstand elektrisch in einer Masche verbunden ist, um einen konstanten elektrischen Stromfluss durch den Widerstand bereitzustellen. In anderen Worten ist die Quelle mit dem Widerstand derart verbunden, dass ein Stromfluss durch den Widerstand kontrolliert und/oder vorgegeben werden kann. Der Widerstand ist dabei beispielsweise als Leitungswiderstand oder als diskretes Bauelement ausgeführt, und kann insbesondere auch als Teil einer Impedanz ausgeführt sein. Ebenfalls ist es denkbar, dass der Widerstand als SMD-Bauelement ausgeführt ist.

Es kann ferner möglich sein, dass der elektrische Parameter eine Stromstärke der Energieversorgung ist, wobei die Modulationseinheit dazu ausgeführt ist, in der Versorgungsleitung einen elektrischen Strom mit dem definierten Wert einzuprägen, insbesondere vorzugeben, vorzugsweise durch eine Konstantstromquelle zur Einspeisung eines konstanten und/oder stabilen elektrischen Stroms. In anderen Worten kann die Konstantstromquelle gegebenenfalls das Einprägen des definierten Wertes verursachen und/oder den konkreten Wert beeinflussen, um eine zuverlässige Informationsübertragung zu gewährleisten.

In einer weiteren Möglichkeit kann vorgesehen sein, dass die Schaltungsanordnung eine Modulationsvorrichtung ausbildet, um anhand der zu übertragenen Informationen ein elektrisches Signal der Energieversorgung geleitet durch die Versorgungsleitung zu modulieren, wobei vorzugsweise die Modulation durch das wiederholte Einprägen des definierten Wertes erfolgt. Beispielsweise kann es sich bei der Modulation um eine Pulsmodulation und/oder um eine Frequenzmodulation und/oder um eine Amplitudenmodulation handeln. Dies ermöglicht es, die Informationsübertragung über die gleiche elektrische Leitung durchzuführen, welche auch zur Energieversorgung dient.

Ein weiterer Vorteil im Rahmen der Erfindung ist erzielbar, wenn die Schaltungsanordnung dazu ausgeführt ist, durch ein Schalten der Modulationseinheit, insbesondere von einem geöffneten in einen geschlossenen Schaltzustand, einen Puls bei einem elektrischen Signal (Versorgungssignal) der Versorgungsleitung zu erzeugen, um insbesondere durch eine Auswertung des Pulses durch die fahrzeugseitige Elektronik die Informationsübertragung durchzuführen. Das Umschalten zwischen dem geöffneten und dem geschlossenen Schaltzustand erfolgt dabei insbesondere durch ein Eingangssignal der Modulationseinheit. Im geöffneten Schaltzustand kann zum Beispiel ein elektrischer Widerstand der Modulationseinheit erhöht sein und im geschlossenen Schaltzustand verringert sein. Auf diese Weise kann die Modulationseinheit auch dazu ausgebildet sein, einen elektrischen Strom zu schalten. Dieses Schalten kann die Informationsübertragung maßgeblich beeinflussen.

Erfindungsgemäß vorgesehen ist ein System, vorzugsweise Türgriffsystem, für ein Fahrzeug, aufweisend:
- eine Komponente des Fahrzeuges, welche vorzugsweise einzeln montierbar als Modul ausgeführt ist,
- eine fahrzeugseitige Elektronik, welche mit einer (wiederaufladbaren) Fahrzeugbatterie zur Bereitstellung einer Energieversorgung, insbesondere elektrisch, verbunden ist,
- eine elektrische Versorgungsleitung der Komponente, welche zur Bereitstellung der Energieversorgung für die Komponente mit der fahrzeugseitigen Elektronik, insbesondere elektrisch, verbunden ist,
- eine Schaltungsanordnung der Komponente zur Informationsübertragung an die fahrzeugseitige Elektronik über die Versorgungsleitung durch eine Veränderung eines elektrischen Parameters der Energieversorgung,
- eine Modulationseinheit der Schaltungsanordnung zur Bereitstellung der Veränderung durch ein Einprägen eines definierten Wertes für den Parameter.

Damit bringt das erfindungsgemäße System die gleichen Vorteile mit sich, wie sie ausführlich mit Bezug auf eine oben beschriebene Komponente beschrieben worden sind. Zudem kann die Komponente des erfindungsgemäßen Systems als eine oben beschriebene Komponente ausgebildet sein.

Erfindungsgemäß ist es vorgesehen, dass die fahrzeugseitige Elektronik dazu ausgeführt ist, zum Empfang (Erfassung) der übertragenen Informationen ein Versorgungssignal der Energieversorgung anhand einer Spannungsschwelle auszuwerten, vorzugsweise um Pulse im Versorgungssignal zu detektieren, welche durch die Modulationseinheit aufmoduliert sind. Hierzu kann das Versorgungssignal zum Beispiel wiederholt mit der Spannungsschwelle elektronisch verglichen werden, um bei einem Unterschreiten durch einen Spannungswert des Versorgungssignals den Puls zu detektieren. Gleichzeitig kann das Versorgungssignal weiterhin zur Energieversorgung und insbesondere Energieübertragung an die Komponente dienen.

Nach einer weiteren Möglichkeit kann vorgesehen sein, dass die fahrzeugseitige Elektronik dazu ausgeführt ist, zur Informationsübertragung einen Spannungsabfall bei der Energieversorgung zu erfassen, um anhand des Spannungsabfalls einen Puls zu detektieren, welcher für das Einprägen spezifisch ist. Der Puls kann zum Beispiel dadurch für das Einprägen spezifisch sein, dass das Einprägen den Spannungsabfall von einem Ursprungswert auf den definierten Wert bewirkt. Auf diese Weise wird die Zuverlässigkeit der Informationsübertragung erhöht.

Optional ist es denkbar, dass die fahrzeugseitige Elektronik dazu ausgeführt ist, die Energieversorgung durch eine Übertragung eines (insbesondere einzigen) elektrischen Versorgungssignals über die Versorgungsleitung bereitzustellen, wobei insbesondere dieses Versorgungssignal zur Informationsübertragung pulsmoduliert bereitgestellt wird, und/oder beispielsweise eine Pulsamplitude der Pulse durch den eingeprägten definierten Wert bestimmt ist. Somit kann das Stabilisieren der Pulsamplitude durch die Komponente, insbesondere durch eine schaltbare Stromsenke, die Informationsübertragung verbessern. Insbesondere dient die Schaltungsanordnung zur Bereitstellung einer Trägerfrequenzanlage für die Informationsübertragung.

Beispielsweise kann es vorgesehen sein, dass die fahrzeugseitige Elektronik dazu ausgeführt ist, die Energieversorgung durch die Übertragung eines elektrischen Versorgungssignals bereitzustellen, wobei vorzugsweise der elektrische Parameter eine elektrische Stromstärke oder elektrische Spannung des Versorgungssignals ist. Dies ermöglicht es, eine zuverlässige Energieversorgung zu gewährleisten.

In einer weiteren Möglichkeit kann vorgesehen sein, dass die Energieversorgung von einer Versorgungsspannung eines Fahrzeugbordnetzes und/oder der Fahrzeugbatterie abhängig ist, sodass der elektrische Parameter Schwankungen aufweist, welche für die Informationsübertragung, insbesondere für eine Pulsbreite und/oder Pulsamplitude von aufmodulierten Pulsen, signifikant ist. Insbesondere können die Schwankungen dadurch signifikant sein, dass diese die Informationsübertragung beeinträchtigen, da die Erfassung der Informationen durch die fahrzeugseitige Elektronik gegebenenfalls von einer Spannungs- und/oder Stromhöhe des Versorgungssignals der Energieversorgung abhängig ist. Allerdings kann es vorteilhaft sein, die Schwankungen für die Energieversorgung zu tolerieren, da dies eine aufwendige Spannungsstabilisierung für die Energieversorgung erspart.

Ein weiterer Vorteil im Rahmen der Erfindung ist erzielbar, wenn die Komponente als Türgriff, vorzugsweise Fahrzeugaußentürgriff, oder als Außenspiegel oder als Schweller oder als Stoßfänger oder dergleichen ausgebildet ist, und die fahrzeugseitige Elektronik als ein Steuergerät für die Komponente - wie den Türgriff - ausgebildet ist. Beispielsweise kann das Steuergerät im Fahrzeuginneren vorgesehen sein, und durch die Versorgungsleitung und/oder eine Masseleitung mit der Komponente wie dem Türgriff verbunden werden. Es kann sich hierbei insbesondere um eine lösbare Verbindung, zum Beispiel um eine Steckverbindung, handeln. Dies ermöglicht eine vereinfachte Montage. Auch kann es möglich sein, dass die Verbindung wenigstens ein Befestigungsmittel, wie ein Rastmittel oder Schrauben aufweist.

Nicht umfasst vom Schutzbereich der Erfindung ist ein Verfahren zur Informationsübertragung bei einer Komponente eines Fahrzeuges.

Vorteilhafterweise kann bei einem derartigen Verfahren zumindest einer der nachfolgenden Schritte, insbesondere automatisch, durchgeführt werden, wobei die Schritte bevorzugt nacheinander in der angegebenen Reihenfolge oder in beliebiger Reihenfolge durchgeführt werden, und gegebenenfalls auch einzelne Schritte wiederholt werden können:
- Bereitstellen einer Energieversorgung für die Komponente,
- Übertragen von Informationen über die Energieversorgung durch ein Ansteuern, insbesondere Schalten, einer Modulationseinheit der Komponente, sodass ein elektrischer Parameter der Energieversorgung in Abhängigkeit von den Informationen verändert wird, wobei die Veränderung durch ein Einprägen eines definierten Wertes für den Parameter erfolgt.

Damit bringt das Verfahren die gleichen Vorteile mit sich, wie sie ausführlich mit Bezug auf eine Komponente und/oder ein erfindungsgemäßes System beschrieben worden sind. Zudem kann das Verfahren geeignet sein, eine Komponente und/oder ein erfindungsgemäßes System zu betreiben.

Vorteilhafterweise kann bei der Erfindung vorgesehen sein, dass die Informationen wenigstens eine der nachfolgenden Informationen umfassen:
- Informationen über eine Annäherung eines Objekts an die Komponente, vorzugsweise von einem Annäherungssensor der Komponente,
- Informationen über eine Authentifizierung eines ID-Gebers, vorzugsweise empfangen von einer Empfangseinheit der Komponente,
- Informationen über eine Betätigung der Komponente, vorzugsweise zum Entriegeln und/oder Öffnen einer Tür des Fahrzeuges.

Beispielsweise können die Informationen genutzt werden, um mindestens eine Funktion des Fahrzeuges zu aktivieren. Dies ermöglicht einen vielseitigen Einsatz der Komponente bei dem Fahrzeug.

Die Energieversorgung kann zum Beispiel zum elektrischen Betreiben der (oder sämtlicher) Elektronik der Komponente dienen, also primär als Nutzenergie und/oder nur sekundär zur Datenübertragung vorzugsweise nur unidirektional von der Komponente zur Fahrzeugelektronik.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen beispielhaft:
- Fig. 1: eine schematische Seitenansicht eines Fahrzeuges,
- Fig. 2: eine schematische Darstellung eines Schaltbildes einer Komponente sowie von weiteren Teilen eines erfindungsgemäßen Systems,
- Fig. 3: eine schematische Darstellung eines Versorgungssignals in Abhängigkeit von einem Eingangssignal.

In den nachfolgenden Figuren werden für die gleichen technischen Merkmale auch von unterschiedlichen Ausführungsbeispielen die identischen Bezugszeichen verwendet.

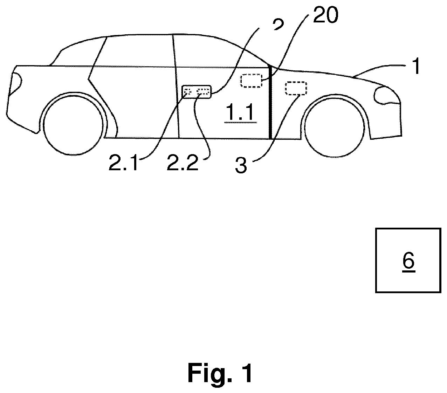

In Fig. 1 gezeigt ist ein System 100 für ein Fahrzeug 1, aufweisend eine Komponente 2 des Fahrzeuges sowie eine fahrzeugseitige Elektronik 20, welche mit einer Fahrzeugbatterie 3 zur Bereitstellung einer Energieversorgung verbunden ist. Die Komponente 2 ist zum Beispiel als ein Türgriff, vorzugsweise Fahrzeugaußentürgriff, ausgebildet und die fahrzeugseitige Elektronik 20 als ein Steuergerät 20 für den Türgriff 2 ausgebildet.

Die fahrzeugseitige Elektronik 20 kann dazu ausgeführt sein, die Energieversorgung durch eine Übertragung eines insbesondere einzigen elektrischen Versorgungssignals V über die Versorgungsleitung 30 bereitzustellen, wobei dieses Versorgungssignal V zur Informationsübertragung zusätzlich moduliert bereitgestellt werden kann. Auf diese Weise kann die Versorgungsleitung gleichzeitig zur Informationsübertragung genutzt werden. Dabei kann es sein, dass die Energieversorgung von einer Versorgungsspannung der Fahrzeugbatterie 3 abhängig ist, sodass die Energieversorgung Schwankungen aufweist, welche für die Informationsübertragung signifikant ist und diese somit gegebenenfalls beeinträchtigen kann.

Es ist möglich, dass die Informationen wenigstens eine der nachfolgenden Informationen umfassen:
- Informationen über eine Annäherung eines Objekts 6 an die Komponente 2, vorzugsweise bereitgestellt von einem Annäherungssensor 2.1 der Komponente 2,
- Informationen über eine Authentifizierung eines ID-Gebers 6, vorzugsweise empfangen und dann bereitgestellt von einer Empfangseinheit 2.2 der Komponente 2,
- Informationen über eine Betätigung der Komponente, vorzugsweise zum Entriegeln und/oder Öffnen einer Tür 1.1 des Fahrzeuges 1.

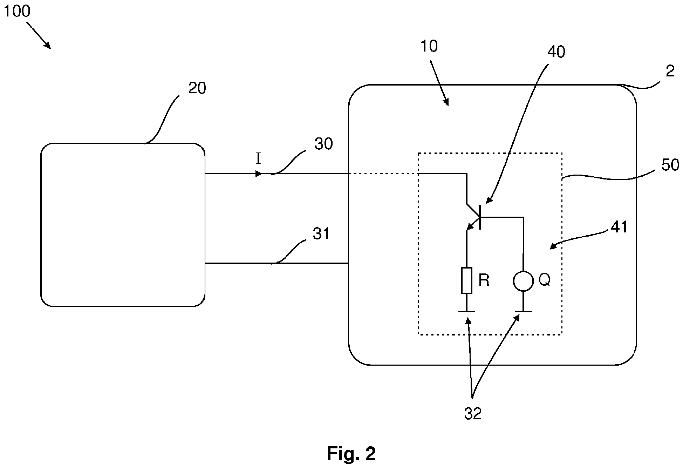

In Fig. 2 ist eine Komponente 2 für ein Fahrzeug 1 schematisch mittels eines Prinzip-Schaltbilds gezeigt. Dabei ist eine elektrische Versorgungsleitung 30 vorgesehen, um eine Energieversorgung für die Komponente 2 über eine fahrzeugseitige Elektronik 20 bereitzustellen. Ebenfalls zur Energieversorgung kann gegebenenfalls eine Masseleitung 31 genutzt werden. Es kann sich dabei um die einzigen Leitungen handeln, welche die Komponente 2 mit anderen Teilen des Fahrzeuges 1 verbindet. Hierzu sind beispielsweise Anschlusselemente, wie elektrische Steckverbinder oder dergleichen, bei der Komponente 2 vorgesehen. Auch kann die Komponente 2 ein Gehäuse aufweisen, welche eine Elektronik der Komponente 2 überwiegend umgibt. Die Elektronik ist zum Beispiel vergossen, wobei (zum Beispiel ausschließlich) die Versorgungsleitung 30 und insbesondere die Masseleitung 31 aus dem Verguss herausführen, um über die Anschlusselemente mit der fahrzeugseitigen Elektronik 20 elektrisch verbunden zu werden. Die fahrzeugseitige Elektronik 20 weist hierzu zum Beispiel ein entsprechendes Kabel auf, welches mit den Anschlusselementen verbunden wird.

Die Elektronik der Komponente 2 kann eine Schaltungsanordnung 10 zur Informationsübertragung an die fahrzeugseitige Elektronik 20 über die Versorgungsleitung 30 aufweisen. Hierzu kann eine Veränderung eines elektrischen Parameters der Energieversorgung erfolgen, welche durch eine Modulationseinheit 40 (der Schaltungsanordnung 10) bereitgestellt werden kann. Zur Bereitstellung der Veränderung wird beispielsweise ein Einprägen eines definierten Wertes für den Parameter durchgeführt. Der Parameter ist insbesondere eine elektrische Stromstärke oder eine elektrische Spannung der Energieversorgung, sodass der definierte Wert ein bestimmter (vorbestimmter) Wert für die Stromstärke oder ein Spannungswert ist. In anderen Worten kann die Modulationseinheit 40 dazu ausgebildet sein, zum Einprägen eine Amplitude A, vorzugsweise eine elektrische Stromstärke I der Energieversorgung, auf den definierten Wert zu ziehen, wobei insbesondere die Stromstärke der Parameter ist.

Die Modulationseinheit 40 kann außerdem eine elektronische Schalteinheit aufweisen, welche in einem geschlossenen Schaltzustand die Versorgungsleitung 30 mit einer Stromsenke 41, insbesondere Konstantstromsenke 41, verbindet, um zum Einprägen eine elektrische Stromstärke der Energieversorgung als der Parameter konstant auf den definierten Wert zu ziehen. Hierzu ist die Schalteinheit zum Beispiel als ein Transistor oder dergleichen ausgebildet.

Wie ebenfalls in Fig. 2 dargestellt ist, kann der eingeprägte (definierte) Wert zumindest durch eine elektrische Quelle Q, wie eine (reale) Spannungs- oder Stromquelle, und/oder durch wenigstens einen Widerstand R definiert sein, welche mit der Modulationseinheit 40 elektrisch verbunden sind. Auf diese Weise kann eine schaltbare Stromsenke 50 ausgebildet werden, wobei die Stromsenke 50 zumindest durch die Modulationseinheit 40, und insbesondere durch die damit verschaltete elektrische Quelle Q gebildet wird, um das Einprägen in Abhängigkeit von einem Schaltzustand der Modulationseinheit 40 bereitzustellen. Konkret ist eine schaltbare Stromsenke 50 zum Einprägen dadurch ausgebildet, dass die Modulationseinheit 40 die Versorgungsleitung 30 mit dem Widerstand R verbindet, wobei die Quelle Q mit dem Widerstand R elektrisch in einer Masche verbunden ist, um einen konstanten elektrischen Stromfluss durch den Widerstand R bereitzustellen. Insbesondere die Verbindung der Quelle Q in derselben Masche wie der Widerstand R kann dazu führen, dass der Wert sehr genau definiert werden kann. In anderen Worten kann der Stromfluss I vorgegeben werden, welcher durch die Verbindung der Versorgungsleitung 30 über die Modulationseinheit 40 und über den Widerstand R mit einem Massepotential 32 ermöglicht wird. Hierzu wird zum Beispiel der Strom durch den Widerstand R mittels der Quelle Q fest eingeprägt. Diese Veränderung durch den eingeprägten Strom - also das Einprägen des Wertes für den Parameter - kann zum Beispiel durch das Schalten der Modulationseinheit 40 bereitgestellt werden. Das Schalten der Modulationseinheit 40 bewirkt somit das Einprägen des definierten Wertes für den Parameter, was auch anhand Fig. 2 ersichtlich ist. Das Schalten erfolgt zum Beispiel in einen geschlossenen Zustand der Modulationseinheit 40, sodass ein Strompfad zwischen der Versorgungsleitung 30 und dem Widerstand R und/oder einem Massepotential 32 leitend wird.

Der elektrische Parameter kann eine Stromstärke der Energieversorgung sein, wobei die Modulationseinheit 40 dazu ausgeführt ist, in der Versorgungsleitung 30 einen elektrischen Strom I mit dem definierten Wert einzuprägen (das heißt die Stromstärke mit dem Wert festzulegen), vorzugsweise durch eine Konstantstromquelle 41 zur Einspeisung eines konstanten elektrischen Stroms I. Alternativ oder zusätzlich kann die Schaltungsanordnung 10 eine Modulationsvorrichtung 10 ausbilden, um anhand der zu übertragenen Informationen ein elektrisches Signal der Energieversorgung geleitet durch die Versorgungsleitung 30 zu modulieren, wobei die Modulation durch das wiederholte Einprägen des definierten Wertes erfolgt. Ferner kann die Schaltungsanordnung 10 dazu ausgeführt sein, durch ein Schalten der Modulationseinheit 40, insbesondere von einem geöffneten in einen geschlossenen Schaltzustand, einen Puls bei einem elektrischen Signal der Versorgungsleitung 30 zu erzeugen, um durch eine Auswertung des Pulses durch die fahrzeugseitige Elektronik 20 die Informationsübertragung durchzuführen.

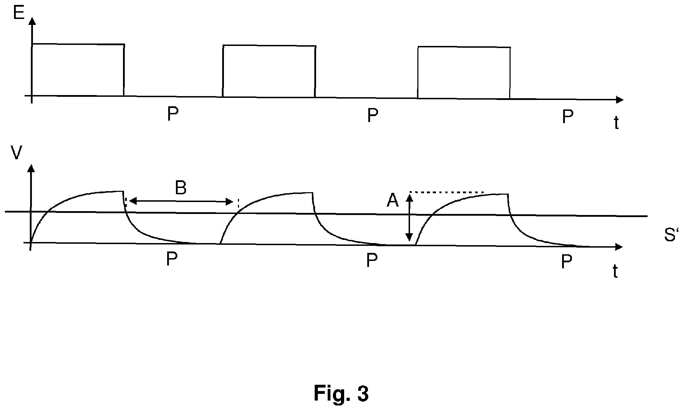

In Fig. 3 ist ferner ein Verfahren zur Informationsübertragung bei einer Komponente 2 eines Fahrzeuges 1 zumindest teilweise veranschaulicht. Bei diesem Verfahren kann zunächst eine Energieversorgung für die Komponente 2 bereitgestellt werden. Die Energieversorgung wird zum Beispiel durch das Übertragen eines elektrischen Versorgungssignals V bereitgestellt. Zudem kann es möglich sein, dass ein Übertragen von Informationen über die Energieversorgung (mittels des Versorgungssignals V) durch ein Schalten einer Modulationseinheit 40 der Komponente 2 ermöglicht wird. Das Schalten erfolgt zum Beispiel durch ein Eingangssignal E als Schaltsignal E für die Modulationseinheit 40. Hierbei kann ein elektrischer Parameter der Energieversorgung in Abhängigkeit von den Informationen und insbesondere auch von dem Schaltsignal E verändert werden, wobei die Veränderung durch ein Einprägen eines definierten Wertes für den Parameter erfolgt. Die Veränderung ist anhand des dargestellten Versorgungssignals V erkennbar, welches bei jedem Puls P einen Spannungsabfall aufweist.

Die fahrzeugseitige Elektronik 20 kann dazu ausgeführt sein, zum Empfang von der Komponente 2 übertragenen Informationen das Versorgungssignal V der Energieversorgung anhand einer Spannungsschwelle S' auszuwerten, vorzugsweise um die Pulse P über die Zeit t im Versorgungssignal V zu detektieren, welche durch die Modulationseinheit 40 aufmoduliert sind. Die fahrzeugseitige Elektronik 20 kann ferner dazu ausgeführt sein, zur Informationsübertragung den Spannungsabfall bei der Energieversorgung zu erfassen, um anhand des Spannungsabfalls den Puls P zu detektieren, welcher für das Einprägen spezifisch ist. Es ist in Fig. 3 erkennbar, dass Schwankungen der Spannung des Versorgungssignals V aufgrund der festgelegten Schwelle S' die detektierte Pulsbreite B und/oder die Pulsamplitude A beeinflussen kann. In anderen Worten können solche Schwankungen der Energieversorgung die Informationsübertragung beeinträchtigen. Daher kann mittels der Modulationseinheit 40 und/oder der schaltbaren Stromsenke 50 gewährleistet werden, dass der Spannungsabfall stets in definierter Weise erfolgt und somit anhand der Schwelle S' der Puls P zuverlässiger detektiert werden kann. Der definierte Wert, welcher hierzu von der Modulationseinheit 40 und/oder schaltbaren Stromsenke 50 beim Versorgungssignal V aufgeprägt wird, kann zum Beispiel in Abhängigkeit von der genutzten Schwelle S' festgelegt werden. Ferner kann die Modulationseinheit 40 als Schalteinheit zum Beispiel durch einen Taktgeber wie einen Mikrocontroller oder dergleichen zum Schalten mittels des Eingangssignals E angesteuert werden.

Die voranstehende Erläuterung der Ausführungsformen beschreibt die vorliegende Erfindung ausschließlich im Rahmen von Beispielen.

### Bezugszeichenliste

- 1: Fahrzeug
- 2: Komponente, Türgriff
- 2.1: Annäherungssensor
- 2.2: Empfangseinheit
- 3: Fahrzeugbatterie
- 6: Objekt

- 10: Schaltungsanordnung, Modulationsvorrichtung

- 20: fahrzeugseitige Elektronik, Steuergerät

- 30: Versorgungsleitung
- 31: Masseleitung
- 32: Massepotential

- 40: Modulationseinheit, Schalteinheit
- 41: Stromsenke, Konstantstromsenke

- 50: schaltbare Stromsenke

- 100: System

- t: Zeit
- A: Pulsamplitude
- B: Pulsbreite
- E: Eingangssignal, Schaltsignal für 40
- I: Strom
- P: Puls
- Q: Quelle
- R: Widerstand
- S': Schwelle
- V: Versorgungssignal

## Patentansprüche

1. System für ein Fahrzeug (1) aufweisend:
- eine Komponente (2) des Fahrzeuges (1),
- eine fahrzeugseitige Elektronik (20), welche mit einer Fahrzeugbatterie (3) zur Bereitstellung einer Energieversorgung verbunden ist,
- eine elektrische Versorgungsleitung (30) der Komponente (2), welche zur Bereitstellung der Energieversorgung für die Komponente (2) mit der fahrzeugseitigen Elektronik (20) verbunden ist,
- eine Schaltungsanordnung (10) der Komponente (2) zur Informationsübertragung an die fahrzeugseitige Elektronik (20) über die Versorgungsleitung (30) durch eine Veränderung eines elektrischen Parameters der Energieversorgung,
- eine Modulationseinheit (40) der Schaltungsanordnung (10) zur Bereitstellung der Veränderung durch ein Einprägen eines definierten Wertes für den Parameter,
wobei eine schaltbare Stromsenke (50) zum Einprägen dadurch ausgebildet ist, dass die Modulationseinheit (40) die Versorgungsleitung (30) mit einem Widerstand (R) verbindet, wobei eine Quelle (Q) mit dem Widerstand (R) elektrisch in einer Masche verbunden ist, um einen konstanten elektrischen Stromfluss durch den Widerstand (R) bereitzustellen, wobei die fahrzeugseitige Elektronik (20) dazu ausgeführt ist, zum Empfang der übertragenen Informationen ein Versorgungssignal (V) der Energieversorgung anhand einer Spannungsschwelle auszuwerten, um Pulse (P) im Versorgungssignal (V) zu detektieren, welche durch die Modulationseinheit (40) aufmoduliert sind.

2. System nach Anspruch 1,
**dadurch gekennzeichnet,**
**dass** die fahrzeugseitige Elektronik (20) dazu ausgeführt ist, zur Informationsübertragung einen Spannungsabfall bei der Energieversorgung zu erfassen, um anhand des Spannungsabfalls einen Puls (P) zu detektieren, welcher für das Einprägen spezifisch ist.

3. System nach einem der Ansprüche 1 bis 2,
**dadurch gekennzeichnet,**
**dass** die fahrzeugseitige Elektronik (20) dazu ausgeführt ist, die Energieversorgung durch eine Übertragung eines elektrischen Versorgungssignals (V) über die Versorgungsleitung (30) bereitstellen, wobei dieses Versorgungssignal (V) zur Informationsübertragung moduliert, insbesondere pulsmoduliert, vorzugsweise bereitgestellt wird, wobei eine Pulsamplitude (A) der Pulse (P) durch den eingeprägten definierten Wert bestimmt ist
und **dass** die fahrzeugseitige Elektronik (20) dazu ausgeführt ist, die Energieversorgung durch die Übertragung eines elektrischen Versorgungssignals (V) bereitzustellen, wobei der elektrische Parameter eine elektrische Stromstärke oder elektrische Spannung des Versorgungssignals (V) ist
und **dass** die Energieversorgung von einer Versorgungsspannung der Fahrzeugbatterie (3) abhängig ist, sodass der elektrische Parameter Schwankungen aufweist, welche für die Informationsübertragung, insbesondere für eine Pulsbreite (B) und/oder Pulsamplitude (A) von aufmodulierten Pulsen (P), signifikant ist.

4. System nach einem der Ansprüche 1 bis 3,
**dadurch gekennzeichnet,**
**dass** die Komponente (2) als Türgriff, vorzugsweise Fahrzeugaußentürgriff, ausgebildet ist, und die fahrzeugseitige Elektronik (20) als ein Steuergerät (20) für den Türgriff (2) ausgebildet ist.

5. System nach einem der vorangegangenen Ansprüche,
**dadurch gekennzeichnet,**
**dass** die Modulationseinheit (40) dazu ausgebildet ist, zum Einprägen eine Amplitude (A) auf den definierten Wert zu ziehen.

6. System nach einem der vorangegangenen Ansprüche,
**dadurch gekennzeichnet,**
**dass** die Modulationseinheit (40) eine elektronische Schalteinheit (40) aufweist, welche in einem geschlossenen Schaltzustand die Versorgungsleitung (30) mit einer Stromsenke (41) verbindet, um zum Einprägen eine elektrische Stromstärke der Energieversorgung als der Parameter stabil auf den definierten Wert zu ziehen
und **dass** der eingeprägte Wert zumindest durch eine elektrische Quelle (Q) und/oder durch wenigstens einen Widerstand (R) definiert ist, welche mit der Modulationseinheit (40) elektrisch verbunden sind.

7. System nach einem der vorangegangenen Ansprüche,
**dadurch gekennzeichnet,**
**dass** eine schaltbare Stromsenke (50) vorgesehen ist, wobei die Stromsenke (50) zumindest durch die Modulationseinheit (40), und insbesondere durch eine damit verschaltete elektrische Quelle (Q), vorzugsweise Stromquelle (Q), ausgebildet ist, um das Einprägen in Abhängigkeit von einem Schaltzustand der Modulationseinheit (40) bereitzustellen.

8. System nach einem der vorangegangenen Ansprüche,
**dadurch gekennzeichnet,**
**dass** der elektrische Parameter eine Stromstärke der Energieversorgung ist, wobei die Modulationseinheit (40) dazu ausgeführt ist, in der Versorgungsleitung (30) einen elektrischen Strom (I) mit dem definierten Wert einzuprägen, vorzugsweise durch eine Konstantstromquelle (41) zur Einspeisung eines konstanten elektrischen Stroms (I).

9. System nach einem der vorangegangenen Ansprüche,
**dadurch gekennzeichnet,**
**dass** die Schaltungsanordnung (10) eine Modulationsvorrichtung (10) ausbildet, um anhand der zu übertragenen Informationen ein elektrisches Signal der Energieversorgung geleitet durch die Versorgungsleitung (30) zu modulieren, wobei die Modulation durch das wiederholte Einprägen des definierten Wertes erfolgt
und **dass** die Schaltungsanordnung (10) dazu ausgeführt ist, durch ein Schalten der Modulationseinheit (40), insbesondere von einem geöffneten in einen geschlossenen Schaltzustand, einen Puls bei einem elektrischen Signal der Versorgungsleitung (30) zu erzeugen, um durch eine Auswertung des Pulses durch die fahrzeugseitige Elektronik (20) die Informationsübertragung durchzuführen.

## Claims

1. System for a vehicle (1):
- a component (2) of the vehicle (1),
- vehicle electronics (20), which are connected to a vehicle battery (3) to provide a power supply,
- an electrical supply line (30) of the component (2), which is connected to the vehicle electronics (20) to provide the power supply for the component (2),
- a circuit arrangement (10) of the component (2) for transmitting information to the vehicle electronics (20) via the supply line (30) by changing an electrical parameter of the power supply,
- a modulation unit (40) of the circuit arrangement (10) for providing the change by imprinting a defined value for the parameter,
wherein a switchable current sink (50) for impressing is formed in that the modulation unit (40) connects the supply line (30) to a resistor (R), wherein a source (Q) is electrically connected to the resistor (R) in a mesh to provide a constant electrical current flow through the resistor (R), the vehicle electronics (20) being designed to evaluate a supply signal (V) of the power supply on the basis of a voltage threshold in order to receive the transmitted information, in order to detect pulses (P) in the supply signal (V) which are modulated by the modulation unit (40).

2. System according to claim 1,
**characterized in that**
the vehicle electronics (20) are designed to detect a voltage drop in the power supply for information transmission in order to detect a pulse (P) which is specific to the imprinting on the basis of the voltage drop.

3. System according to any one of claims 1 to 2,
**characterized in that**
the vehicle electronics (20) are designed to provide the power supply by transmitting an electrical supply signal (V) via the supply line (30), this supply signal (V) being modulated, in particular pulse-modulated, preferably provided for information transmission, a pulse amplitude (A) of the pulses (P) being determined by the impressed defined value
and **in that** the vehicle electronics (20) are designed to provide the power supply by transmitting an electrical supply signal (V), the electrical parameter being an electrical current or electrical voltage of the supply signal (V)
and **in that** the power supply is dependent on a supply voltage of the vehicle battery (3), so that the electrical parameter exhibits fluctuations which are significant for the transmission of information, in particular for a pulse width (B) and/or pulse amplitude (A) of modulated pulses (P).

4. System according to any one of claims 1 to 3,
**characterized in that**
the component (2) is designed as a door handle, preferably an exterior vehicle door handle, and the vehicle electronics (20) is designed as a control unit (20) for the door handle (2).

5. System according to any of the preceding claims,
**characterized in that**
the modulation unit (40) is designed to draw an amplitude (A) to the defined value for imprinting.

6. System according to any of the preceding claims,
**characterized in that**
the modulation unit (40) has an electronic switching unit (40) which, in a closed switching state, connects the supply line (30) to a current sink (41) in order to draw an electrical current strength of the power supply as the parameter stably to the defined value for memorization
and **in that** the impressed value is defined by at least one electrical source (Q) and/or by at least one resistor (R), which are electrically connected to the modulation unit (40).

7. System according to any of the preceding claims,
**characterized in that**
a switchable current sink (50) is provided, the current sink (50) being formed at least by the modulation unit (40), and in particular by an electrical source (Q), preferably current source (Q), connected thereto, in order to provide the imprinting as a function of a switching state of the modulation unit (40).

8. System according to any of the preceding claims,
**characterized in that**
the electrical parameter is a current intensity of the power supply, the modulation unit (40) being designed to inject an electrical current (I) with the defined value into the supply line (30), preferably by means of a constant current source (41) for feeding in a constant electrical current (I).

9. System according to any of the preceding claims,
**characterized in that**
the circuit arrangement (10) forms a modulation device (10) for modulating an electrical signal of the power supply conducted through the supply line (30) on the basis of the information to be transmitted, the modulation being effected by repeatedly impressing the defined value
and **in that** the circuit arrangement (10) is designed to generate a pulse at an electrical signal of the supply line (30) by switching the modulation unit (40), in particular from an open to a closed switching state, in order to carry out the information transmission by evaluating the pulse by the vehicle electronics (20).

## Revendications

1. Système pour un véhicule (1) :
- un composant (2) du véhicule (1),
- une électronique du véhicule (20), qui est reliée à une batterie de véhicule (3) pour fournir une alimentation en énergie,
- une ligne d'alimentation électrique (30) du composant (2), qui est reliée à l'électronique (20) du véhicule pour fournir l'alimentation en énergie pour le composant (2),
- un agencement de circuit (10) du composant (2) pour la transmission d'informations à l'électronique (20) du véhicule par l'intermédiaire de la ligne d'alimentation (30) par une modification d'un paramètre électrique de l'alimentation en énergie,
- une unité de modulation (40) de l'agencement de circuit (10) pour fournir le changement par une empreinte d'une valeur définie pour le paramètre,
dans lequel un puits de courant commutable (50) pour l'empreinte est réalisé par le fait que l'unité de modulation (40) relie la ligne d'alimentation (30) à une résistance (R), une source (Q) étant reliée électriquement à la résistance (R) dans un maillage afin de fournir un flux de courant électrique constant à travers la résistance (R), l'électronique (20) du véhicule étant conçue pour évaluer un signal d'alimentation (V) de l'alimentation en énergie à l'aide d'un seuil de tension pour recevoir les informations transmises, afin de détecter des impulsions (P) dans le signal d'alimentation (V) qui sont modulées par l'unité de modulation (40).

2. Système selon la revendication 1,
**caractérisé en ce que**
l'électronique (20) du véhicule est conçue pour détecter une chute de tension lors de l'alimentation en énergie pour la transmission d'informations, afin de détecter, à l'aide de la chute de tension, une impulsion (P) qui est spécifique à l'imprégnation.

3. Système selon l'une quelconque des revendications 1 à 2,
**caractérisé en ce que**
l'électronique (20) du véhicule est conçue pour fournir l'alimentation en énergie par une transmission d'un signal d'alimentation (V) électrique par la ligne d'alimentation (30), ce signal d'alimentation (V) étant modulé, en particulier modulé par impulsions, de préférence fourni pour la transmission d'informations, une amplitude d'impulsion (A) des impulsions (P) étant déterminée par la valeur définie imprimée
et **en ce que** l'électronique du véhicule (20) est adaptée pour fournir l'alimentation en énergie par la transmission d'un signal d'alimentation électrique (V), le paramètre électrique étant une intensité de courant électrique ou une tension électrique du signal d'alimentation (V)
et **en ce que** l'alimentation en énergie dépend d'une tension d'alimentation de la batterie (3) du véhicule, de sorte que le paramètre électrique présente des variations qui sont significatives pour la transmission d'informations, notamment pour une largeur d'impulsion (B) et/ou une amplitude d'impulsion (A) d'impulsions (P) modulées.

4. Système selon l'une quelconque des revendications 1 à 3,
**caractérisé en ce que**
le composant (2) est conçu comme une poignée de porte, de préférence une poignée de porte extérieure de véhicule, et l'électronique (20) du véhicule est conçue comme un appareil de commande (20) pour la poignée de porte (2).

5. Système selon l'une quelconque des revendications précédentes,
**caractérisé en ce que**
l'unité de modulation (40) est conçue pour tirer une amplitude (A) sur la valeur définie pour l'imprégnation.

6. Système selon l'une quelconque des revendications précédentes,
**caractérisé en ce que**
l'unité de modulation (40) comporte une unité de commutation électronique (40) qui, dans un état de commutation fermé, relie la ligne d'alimentation (30) à un puits de courant (41) pour tirer de manière stable une intensité de courant électrique de l'alimentation en énergie en tant que paramètre à la valeur définie pour l'imprégner
et **en ce que** la valeur imprimée est définie au moins par une source électrique (Q) et/ou par au moins une résistance (R) qui sont reliées électriquement à l'unité de modulation (40).

7. Système selon l'une quelconque des revendications précédentes,
**caractérisé en ce qu'**
il est prévu un puits de courant commutable (50), le puits de courant (50) étant réalisé au moins par l'unité de modulation (40), et en particulier par une source électrique (Q), de préférence une source de courant (Q), connectée à celle-ci, pour fournir l'empreinte en fonction d'un état de commutation de l'unité de modulation (40).

8. Système selon l'une quelconque des revendications précédentes,
**caractérisé en ce que**
le paramètre électrique est une intensité de courant de l'alimentation en énergie, l'unité de modulation (40) étant conçue pour injecter dans la ligne d'alimentation (30) un courant électrique (I) ayant la valeur définie, de préférence par une source de courant constant (41) pour alimenter un courant électrique constant (I).

9. Système selon l'une quelconque des revendications précédentes,
**caractérisé en ce que**
l'agencement de circuit (10) forme un dispositif de modulation (10) pour moduler, à l'aide des informations à transmettre, un signal électrique de l'alimentation en énergie guidé par la ligne d'alimentation (30), la modulation étant effectuée par l'application répétée de la valeur définie
et **en ce que** l'agencement de circuit (10) est réalisé pour générer, par une commutation de l'unité de modulation (40), en particulier d'un état de commutation ouvert à un état de commutation fermé, une impulsion pour un signal électrique de la ligne d'alimentation (30), afin d'effectuer la transmission d'informations par une évaluation de l'impulsion par l'électronique (20) du véhicule.
